# EUROPEAN PATENT APPLICATION

(11) **EP 2 333 740 A1**
(43) Date of publication of application: **15.06.2011**
(21) Application number: 10190808.5
(22) Date of filing: 11.11.2010
(51) Int. Cl.: G08C 17/02, G08C 23/04

(54) **Remote control apparatus and method thereof**

(30) Priority: 10.12.2009 KR 20090122704
(71) Applicant: Samsung Electronics Co., Ltd., Suwon-si, Gyeonggi-do (KR)
(72) Inventor: Seo, Je-hwan, Daegu (KR); Park, In-shik, Gyeonggi-do (KR); Hwang, Tae-don, Gyeonggi-do (KR)
(74) Representative: Hewett, Jonathan Michael Richard

(57) **Abstract**

Provided are an apparatus, system and method thereof for a remote control including a radio frequency (RF) antenna operable to transmit an RF signal to a first device; an infrared (IR) transmitter operable to transmit an IR signal to a second device; a user input unit operable to receive an input command from a user; a controller which determines if the input command is received, and if the input command is received, the controller controls the RF antenna to transmit the RF signal to the first device and the controller controls the IR transmitter to transmit the IR signal to the second device.

## Description

### The present invention relates to a remote control device.

Some modern remote controls are capable of controlling multiple devices. For example, a programmable remote control may be used to control a television and a stereo system. However, modern remote controls have a drawback in that they are not capable of controlling two separate devices concurrently. That is, modern remote controls are not capable of concurrently controlling two independently-controlled devices. Thus, there is a need for a remote control which can solve this problem.

It should be noted that, as used herein, the term "concurrently" means to be at the same time, or seemingly at the same time, as experienced from a user's perspective. Also, the terms "concurrently" and "simultaneously" are used synonymously herein. Further, as used herein, the terms "concurrently" and "simultaneously" also include a semi-concurrent, or semi-simultaneous situation (i.e., where an action appears to be concurrent or simultaneous to a user).

Aspects of the present invention provide a remote control, a system and methods for controlling a plurality of devices with a remote control.

According to an exemplary embodiment of the present invention, a remote control may include: a radio frequency (RF) antenna operable to transmit an RF signal to a first device; an infrared (IR) transmitter operable to transmit an IR signal to a second device; a user input unit operable to receive an input command from a user; a controller which determines if the input command is received, and if the input command is received, the controller controls the RF antenna to transmit the RF signal to the first device and the controller controls the IR transmitter to transmit the IR signal to the second device.

The controller may simultaneously control the RF antenna to transmit the RF signal to the first device and the IR transmitter to transmit the IR signal to the second device transmitting of the RF signal.

The RF antenna may transmit the RF signal according to a ZigBee-compliant protocol.

The first device may be a display device and the second device is an external speaker.

The input command may be a volume change command.

The transmitted RF signal may control the first device to change an output of the first device according to the received input command, and wherein the transmitted IR signal may control the second device to change an output of the second device according to the received input command.

The first device may be a display device and the second device is an external speaker, wherein the input command is a volume change command, and wherein the transmitted RF signal may control the display device to display a volume change according to the received input command, and wherein the transmitted IR signal may control the external speaker to change an output volume level according to the received input command.

According to another exemplary embodiment of the present invention, a method for controlling a plurality of devices with a remote control, having a radio frequency (RF) antenna and an infrared (IR) transmitter, may include: determining if an input command is received by the remote control; if the input command is received, controlling the remote control to transmit an RF signal from the RF antenna to a first device; and if the input command is received by the remote control, controlling the remote control to transmit an IR signal from the IR transmitter to a second device.

If the input command is received by the remote control, the controlling of the remote control to transmit the RF signal may be performed simultaneously with the controlling of the remote control to transmit the IR signal.

The remote control may control the RF antenna to transmit the RF signal according to a ZigBee-compliant protocol.

According to another exemplary embodiment of the present invention, a remote controlled audio/visual (A/V) system may include: a display device operable to output a first signal; an audio device operable to output a second signal; and a remote control operable to control the first device and the second device, wherein the remote control includes: a radio frequency (RF) antenna operable to transmit an RF signal to the first device; an infrared (IR) transmitter operable to transmit an IR signal to the second device; a user input unit operable to receive an input command from a user; a controller which determines if the input command is received, and if the input command is received, the controller controls the RF antenna to transmit the RF signal to the first device and the controller controls the IR transmitter to transmit the IR signal to the second device.

According to another exemplary embodiment of the present invention, a method for controlling a plurality of devices with a remote control, having a radio frequency (RF) antenna and an infrared (IR) transmitter, may include: determining if a first device is configured to communicate with a second device; if the first device is configured to communicate with the second device, controlling the remote control to transmit a first RF signal from the RF antenna to the first device and controlling the remote control to transmit an IR signal from the IR transmitter to a second device; and if the first device is not configured to communicate with the second device, controlling the remote control to transmit a second RF signal from the RF antenna to the first device.

The first RF signal may be equivalent to the second RF signal.

The above and/or other aspects of the present invention will become apparent and more readily appreciated from the following description of the exemplary embodiments, taken in conjunction with the accompanying drawings of which:
FIG. 1 illustrates an example of an apparatus according to an exemplary embodiment of the present invention;
FIG. 2 illustrates an example of a system according to an exemplary embodiment of the present invention;
FIG. 3A and 3B respectively illustrate examples of an operation according to an exemplary embodiment of the present invention;
FIGS. 4A, 4B and 4C respectively illustrate examples of an operation according to an exemplary embodiment of the present invention; and
FIG. 5 illustrates an example of a system according to an exemplary embodiment of the present invention.

Hereinafter, exemplary embodiments of the present invention will be described with reference to accompanying drawings, wherein like numerals refer to like elements and repetitive descriptions will be avoided as necessary.

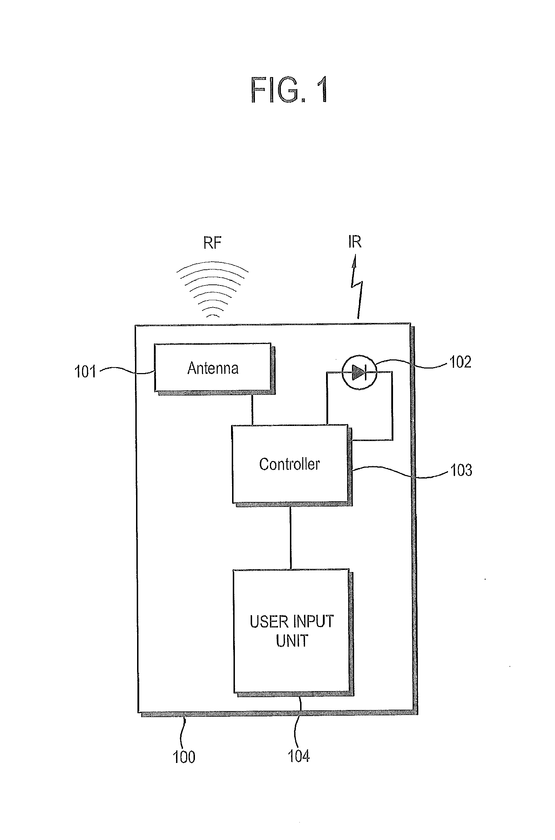

FIG. 1 shows an example of a remote control according to an exemplary embodiment of the present invention. As shown in FIG. 1, the remote control 100 may include a radio frequency (RF) antenna 101, an infrared (IR) transmitter 102, a controller 103 and a user input unit 104. Here, the controller 103 is connected to the user input unit 104, the RF antenna and the IR transmitter 102. The controller 103 can determine if a user input is received via the user input unit 104. Then, the controller can control the RF antenna and the IR transmitter 102 to transmit an RF signal and an IR signal, respectively to another device (not shown).

As used herein, the term "RF signal" can be any RF signal used to communicate between devices. For example, wireless personal area networks (WPANs) utilize protocols such as ZigBee and Bluetooth. In other words, the transmission of the RF signal, as described herein, can be according to a ZigBee-compliant protocol, a Bluetooth-compliant protocol, etc. However, the present invention is not limited thereto. One of skill in the art would understand that many different transmission methods according to different protocols are possible and within the scope of the present invention.

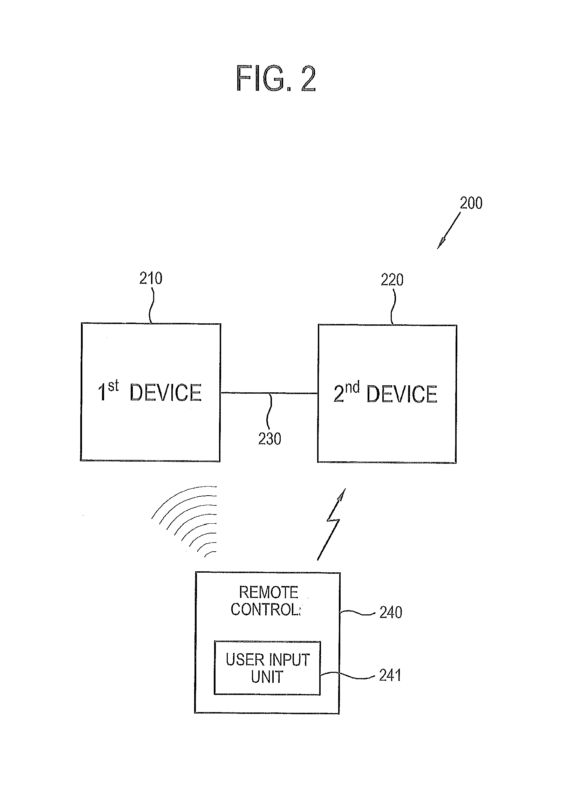

FIG. 2 shows an example of a system according to an exemplary embodiment of the present invention. As shown in FIG. 2, a system 200 may include a first device 210, a second device 220, a connection 230 connecting the first and second devices (210, 220) and a remote control 240. The remote control includes a user input 241, which a user may use to input a command for controlling the first device 210 and/or the second device 220. In this example, the first device 210 receives the RF signal from the remote control 240, and the second device 220 receives the IR signal from the remote control 240.

As an example of such a system, the first device 210 may be a display device. As used herein, the term "display device" is synonymous with "visual display device," and both terms include any type of display device which is capable of operating in a standby mode. Examples include a computer monitor, a television, a handheld device having a display screen, etc. The second device 220 may be a separate device, external to the first device 210, which may be independently controlled.

For example, the second device 220 may be an external speaker, a video game system, a media player, etc., which does not utilize the same RF communication standard that the first device 210 does. Instead, the second device is only capable of receiving an IR control signal from a user. Here, the remote control 240 can send an RF signal to the display device (i.e., the first device 210) and an IR signal to the second device 220 so as to be able to independently control both devices. In this way, the display device (i.e., the first device 210) may be made (via the transmitted RF signal) to display a screen or perform a task related to the control operation of the second device transmitted via the IR signal. In other words, in such a system, a user may wish to perform a task on the second device, but the user needs the first device to also perform some task which is related to the task being performed on the second device.

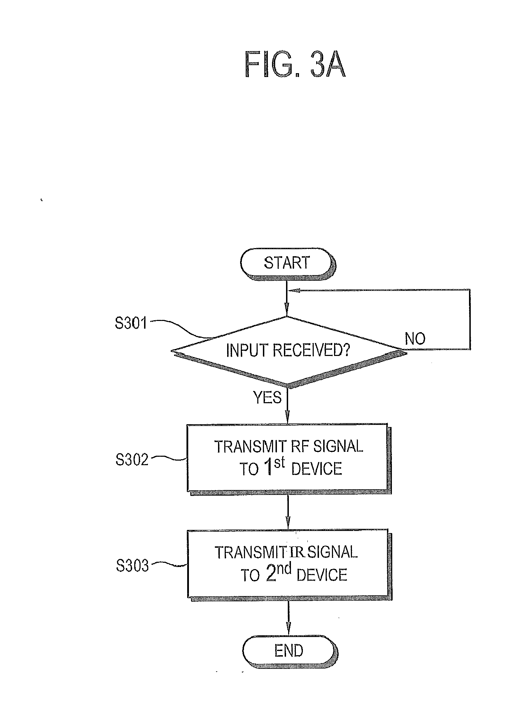

FIG. 3A shows an example of an operation of a remote control according to an exemplary embodiment of the present invention. In operation S301, a determination is made as to whether an input is received (e.g., from a user's input). If the input is received (S301-Y), the remote control transmits an RF signal to the first device in operation S302. The remote control then transmits an IR signal to the second device in operation S303. It should be noted that while FIG. 3A shows the transmission operations (S302 and S303) as occurring separately, the present invention is not limited thereto. That is, the transmission operations may occur in series or in parallel (i.e., at the same time). Likewise, while FIG. 3A shows the RF signal as being transmitted before the IR signal, the present invention is not limited thereto. Instead, the IR signal may be transmitted before the RF signal.

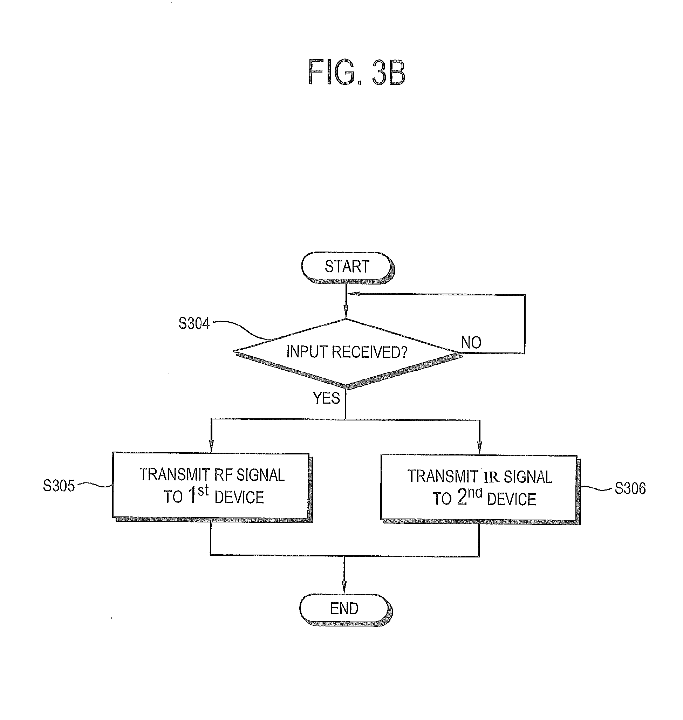

FIG. 3B shows an example of transmitting the signals in parallel (i.e., at the same time). Again, initially, a determination is made as to whether an input is received (e.g., from a user's input) (S304). If the input is received, the transmitting of the RF signal and the IR signal may occur at the same time (S305 and S306).

In some cases, the first device can be configured so as to work with the second device. For example, the first device may be a television and the second device may be an external speaker. In this case, the television may be configured to output a sound signal to the external speaker (e.g., as opposed to the internal speakers). The remote control could then determine that the television is configured to work with the external speaker, and consequently, the remote could then change to a dual transmitting mode, whereby both the RF and the IR signals would be transmitted (e.g., to the television and the external speaker, respectively) in response to a user's input to change a volume level. Alternatively, if the television is not configured to work with the external speaker, the remote control could determine this fact and only output a signal directed to the television (e.g., an RF signal).

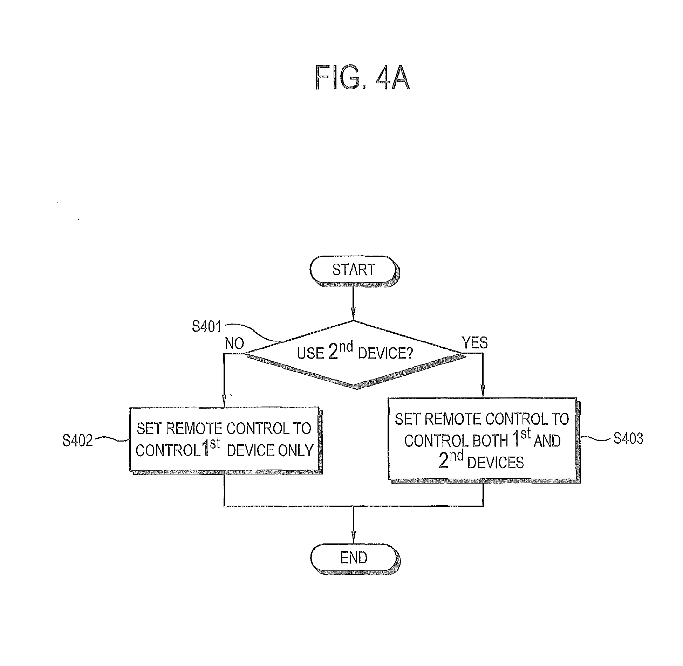

FIG. 4A shows another example of this type of operation of the remote control according to an exemplary embodiment of the present invention. In operation S401, a determination is made whether the second device is used. Note that one way that this may be determined could be by determining whether the first device is configured to communicate with the second device. If the second device is used (S401-Y), the remote control can be set so as to control both the first and the second devices (S403). On the other hand, if the second device is not used (S401-N), the remote control can be set so as to control only the first device (S402).

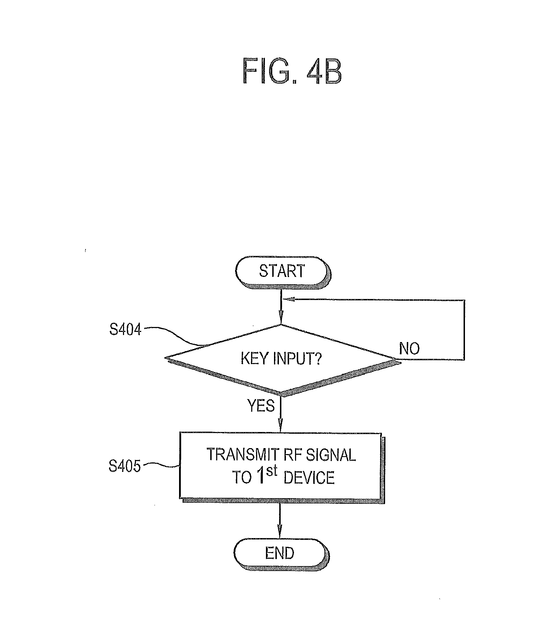

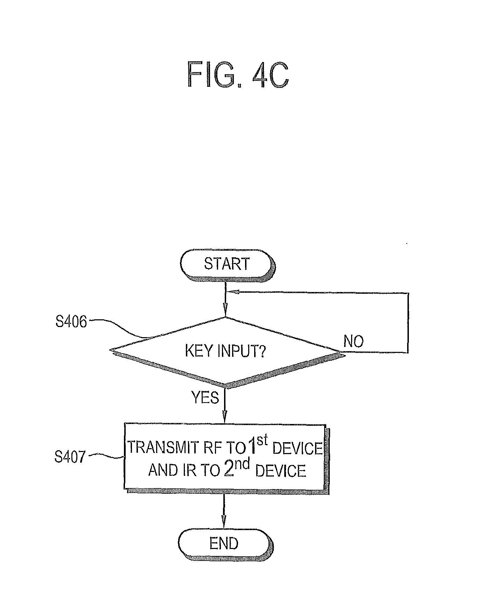

FIG. 4B shows a further example whereby a determination is made as to whether a key input (e.g., from a user) is received by the remote control (S404). If the key input is received (S404-Y), the remote control transmits the RF signal to the first device (S405). On the other hand, as shown in FIG. 4C, if the remote control is configured so as to transmit both the RF and IR signals, and if the key input is received (S406-Y), the remote control transmits the RF signal to the first device and the IR signal to the second device (S407). Again, as noted above, the transmission of the two signals does not have to occur at the same time. Instead, the two signals may be transmitted one before the other.

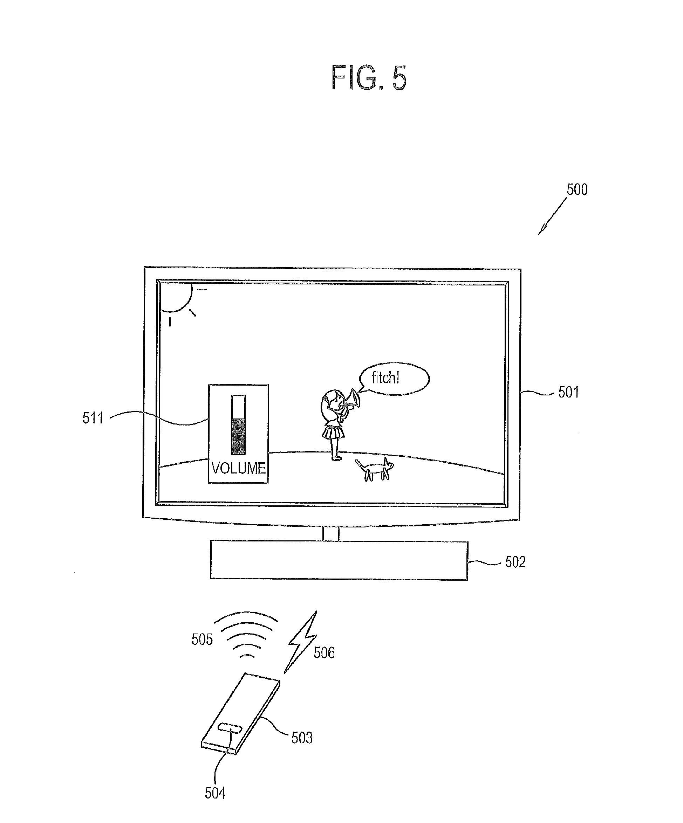

FIG. 5 shows an example of a system according to an exemplary embodiment of the present invention. In this example, the system 500 includes a display device 501, an external speaker 502 and a remote control 503 having a user input unit 504. If a user inputs a command to increase the sound volume via user input unit 504, and the display device 501 is configured to work with the external speaker 502, the remote control 503 transmits an RF signal 505 and an IR signal 506 to the display device 501 and the external speaker 502, respectively. In this case, the display device 501 responds by displaying the volume level indicator 511 (showing the increase in the volume level), and the external speaker 502 responds by increasing the output volume.

Note that in this example the display device 501 is controlled by the RF signal and the external speaker 502 is controlled by the IR signal. However the present invention is not limited thereto. Instead, the external speaker 502 may be controlled by an RF signal and the display device 501 may be controlled by an RF signal. Alternatively, both devices may be controlled by respective RF signals or respective IR signals.

Additionally, the present invention is not limited to a display device and an external speaker. For example, the first and second devices could be two independently controlled video cameras, and a user may wish to control a simultaneous operation of the two cameras. One of skill in the art would understand that many different devices could be used according to an exemplary embodiment of the present invention.

Additionally, it should be noted that while the above examples describe only a first and second device, the present invention is not limited thereto. One of skill in the art would understand that the remote control of the present invention may be configured so as to control a plurality of devices. For example, a remote control may include multiple transmitters/antennae so as to be able to simultaneously communicate with multiple devices.

Furthermore, as noted above with respect to FIG. 5, while the above examples describe a remote which uses an RF antenna and an IR transmitter, the present invention is not limited thereto. Instead, the remote control may include a plurality of RF antennae or a plurality of IR transmitters so as to be able to communicate with a plurality of RF or IR-controlled devices, respectively.

For example, a user may wish to control a television and a set-top box at the same time (e.g., to control a display of a volume level on the television and to control the volume level of the signal output from the set-top box to the television). Both devices may be controlled by IR signals (or both may be controlled by RF signals). In this case, a user can then press a volume button on the remote and simultaneously control both devices via IR (or RF).

The foregoing exemplary embodiments are merely exemplary and should not be construed as limiting the present invention. The present teaching can be readily applied to other types of methods and apparatuses. Also, the description of the exemplary embodiments of the present invention is intended to be illustrative, and not to limit the scope of the claims, and many alternatives, modifications, and variations will be apparent to those skilled in the art.

## Claims

1. A remote control for controlling a plurality of devices, the remote control comprising:
a radio frequency (RF) antenna operable to transmit an RF signal to a first device;
an infrared (IR) transmitter operable to transmit an IR signal to a second device;
a user input unit operable to receive an input command from a user;
a controller arranged to determine if the input command is received, and if the input command is received, to control the RF antenna to transmit the RF signal to the first device and to control the IR transmitter to transmit the IR signal to the second device.

2. The remote control according to claim 1, wherein the controller is arranged to simultaneously control the RF antenna to transmit the RF signal to the first device and the IR transmitter to transmit the IR signal to the second device.

3. The remote control according to claim 1 or claim 2, wherein the RF antenna is arranged to transmit the RF signal according to a ZigBee-compliant protocol.

4. The remote control according to any one of claims 1 to 3, wherein the first device is a display device and the second device is an external speaker.

5. The remote control according to any one of the preceding claims, wherein the input command is a volume change command.

6. The remote control according to any one of the preceding claims, wherein the transmitted RF signal controls the first device to change an output of the first device according to the received input command, and wherein the transmitted IR signal controls the second device to change an output of the second device according to the received input command.

7. The remote control according to any one of claims 1 to 3, wherein the first device is a display device and the second device is an external speaker, wherein the input command is a volume change command, and wherein the transmitted RF signal controls the display device to display a volume change according to the received input command, and wherein the transmitted IR signal controls the external speaker to change an output volume level according to the received input command.

8. A method for controlling a plurality of devices with a remote control having a radio frequency (RF) antenna and an infrared (IR) transmitter, the method comprising:
determining if an input command is received by the remote control;
if the input command is received, controlling the remote control to transmit an RF signal from the RF antenna to a first device; and
if the input command is received by the remote control, controlling the remote control to transmit an IR signal from the IR transmitter to a second device.

9. The method according to claim 8, wherein if the input command is received by the remote control, the controlling of the remote control to transmit the RF signal is performed simultaneously with the controlling of the remote control to transmit the IR signal.

10. The method according to claim 8 or claim 9, wherein the remote control controls the RF antenna to transmit the RF signal according to a ZigBee-compliant protocol.

11. The method according to any one of claims 8 to 10, wherein the first device is a display device and the second device is an external speaker.

12. The method according to any one of claims 8 to 11, wherein the input command is a volume change command.

13. The method according to any one of claims 8 to 12, wherein the transmitted RF signal controls the first device to change an output of the first device according to the received input command, and wherein the transmitted IR signal controls the second device to change an output of the second device according to the received input command.

14. The method according to any one of claims 8 to 10, wherein the first device is a display device and the second device is an external speaker, wherein the input command is a volume change command, and wherein the transmitted RF signal controls the display device to display a volume change image according to the received input command, and wherein the transmitted IR signal controls the external speaker to change an output volume level according to the received input command.
